# EUROPÄISCHE PATENTSCHRIFT

(11) **EP 0 733 816 B1**
(45) Veröffentlichungstag und Bekanntmachung des Hinweises auf die Patenterteilung: **27.10.1999**
(21) Anmeldenummer: 96101577.3
(22) Anmeldetag: 05.02.1996
(51) Int. Cl.: F16C 11/10

(54) **Drehgelenk**
Rotary joint
Articulation rotative

(30) Priorität: 24.03.1995 DE 19510752
(43) Veröffentlichungstag der Anmeldung: 25.09.1996
(73) Patentinhaber: Heraeus Med GmbH, D-63450 Hanau (DE)
(72) Erfinder: Marka, Rudolf, Dr., D-64287 Darmstadt (DE); Gampe, Uwe, D-65439 Flörsheim (DE)
(74) Vertreter: Kühn, Hans-Christian

(56) Entgegenhaltungen:
- EP-A- 0 636 815
- DE-A- 3 014 283
- DE-A- 4 103 182
- FR-A- 548 834
- FR-A- 2 142 905

## Beschreibung

Die Erfindung betrifft ein Drehgelenk gemäß dem Oberbegriff des Hauptanspruchs 1.

Aus DE 30 14 283 C2 ist ein Drehgelenk an einem drehbar gelagerten Tragarm mit Gewichtsausgleich in der eingangs beschriebenen Art bekannt. Bei dieser Vorrichtung wird der zentrisch angeordnete Federführungskörper bewegt. An ihm sind Druckscheiben beweglich gelagert, die die Bolzen halten. Der Kurvenring ist feststehend im Gehäuse angeordnet. Bei einer Bewegung des Federführungskörpers in Folge einer Verstellbewegung der beschriebenen Aufhängevorrichtung müssen hohe Kräfte vom Federführungskörper über die Bolzen auf den Kurvenring übertragen werden können. Die Lagerung der Bolzen ist jedoch nur zur Aufnahme geringer Kräfte in der Lage, so daß der mit der Vorrichtung bezweckte Gewichtsausgleich auf relativ niedrige Gewichte beschränkt ist. Die Konstruktion der Vorrichtung ist sehr aufwendig und aus den besagten Gründen nicht geeignet, größere Gewichte auszugleichen, wie sie beispielsweise bei medizinischen Geräten auftreten.

Ausgehend vom vorstehend beschriebenen Stand der Technik liegt der Erfindung die Aufgabe zugrunde, ein Drehgelenk mit Gewichtsausgleich zu schaffen, das eine sichere Funktion gewährleistet und gleichzeitig durch einen einfachen und kompakten Aufbau kostengünstig zu fertigen ist.

Erfindungsgemäß wird die Aufgabe für das eingangs charakterisierte Drehgelenk durch die Merkmale des Hauptanspruchskennzeichungsteils gelöst. Die Anzahl der beweglichen Teile ist auf ein Minimum beschränkt und die Bolzen sind stabil gelagert, so daß größere Kräfte übertragen werden können. Das Drehgelenk weist einen relativ großen Schwenkbereich auf. Die zu überwindenden Reibungskräfte sind gering und die Vorrichtung ist genau justierbar. Eine besonders stabile Halterung der Bolzen ist dadurch gegeben, daß die Bolzen beidseitig gehalten sind.

Vorzugsweise ist das Federführungsteil durch die Achse gebildet. Es ist jedoch auch denkbar, die Federn außen, d. h. durch das Gehäuse zu führen. Zweckmäßigerweise ist der Kurvenring an der Achse angeordnet. Alternativ ist es möglich, den Kurvenring am Gehäuse anzuordnen.

Vorteilhaft ist es, daß das Federführungsteil zylindrisch ausgebildet ist. Weiterhin ist es zweckmäßig, daß das zweite Gelenkteil an der Achse axial arretiert ist, insbesondere, daß es mittels eines Axiallagers an der Achse gelagert ist. Derartige Ausgestaltungen vereinfachen den Aufbau und sichern geringe Reibungskräfte.

Es ist weiterhin von Vorteil, daß die Achse Mittel zur axialen Führung des Kurvenringes aufweist, insbesondere, daß die Mittel zur axialen Führung als Zylinderstifte ausgebildet sind, die in Ausnehmungen im Innenumfang des Kurvenringes eingreifen. Dadurch wird auf einfache Weise gesichert, daß der Kurvenring nicht verdreht werden kann. Zweckmäßigerweise ist die Achse an einer Abschlußplatte fixiert, die an dem ersten Gelenkteil starr und im wesentlichen senkrecht zur Achse angeordnet ist. Weiterhin ist es zweckmäßig, daß die an den Bolzen angeordneten Lager als Nadellager ausgebildet sind.

Eine vorteilhafte Ausgestaltung des Drehgelenkes ist dadurch gegeben, daß zwei Bolzen einander gegenüberliegend angeordnet sind, wobei der radiale Abstand der Bolzen zueinander größer ist als der Durchmesser des Axiallagers, da dadurch das Axiallager zwischen den Bolzen angeordnet werden kann und auf diese Weise die Baugröße des Drehgelenkes verringert wird.

In einer weiteren vorteilhaften Ausgestaltung weist der Kurvenring je zwei Endanschläge für die Lager auf, um die Drehbewegung zu begrenzen und eine Schädigung des Drehgelenkes zu verhindern.

Nachfolgend wird ein Ausführungsbeispiel der Erfindung anhand einer Zeichnung näher erläutert. In der Zeichnung zeigen
- Figur 1: eine Explosionsdarstellung eines Drehgelenkes
- Figur 2: einen Längsschnitt durch das Drehgelenk
- Figur 3: einen Längsschnitt durch eine weitere Ausführungsform des Drehgelenkes und
- Figur 4: die schematische Darstellung einer Seitenansicht des Kurvenringes.

Auf einer senkrecht zur Achse angeordneten Abschlußplatte 1 ist die Achse 2 angeordnet, die axial das zylindrische Federführungsteil bildet und auf der die Feder 3 aufgesetzt ist. Die Feder 3 kann als ein Satz Tellerfedern, als Spiralfeder oder auch anders ausgebildet sein. Die Abschlußplatte 1 ist mit dem ersten Gelenkteil 4 fest verbunden. Das Gelenkteil 4 umfaßt die Feder 3. Der Kurvenring 5 ist auf der Achse 2 aufgesetzt und wird durch in Nuten der Achse 2 angeordnete Zylinderstifte 6 gegen ein Verdrehen arretiert. Der Kurvenring 5 weist zwei Steigungen auf, auf denen zwei Bolzen 7 mittels je eines Nadellagers 8 geführt werden. Die Bolzen 7 sind in Ausnehmungen des zweiten Gelenkteiles 9 festsitzend angeordnet und werden um die Achse herum bewegt, sobald das zweite Gelenkteil 9 gedreht wird. Das zweite Gelenkteil 9 greift in das erste Gelenkteil 4 ein. Es weist eine in der Längsachse angeordnete Bohrung auf, durch die das Ende der Achse 2 geführt ist. Auf dieses Ende wird ein Axiallager 10 aufgesetzt und mit einer Mutter 11 auf dem mit einem Gewinde versehenen Ende der Achse 2 arretiert. Das Axiallager 10 ist dabei in einer Ausnehmung des zweiten Gelenkteiles 9 angeordnet. Mit Hilfe der Mutter 11 kann die Federspannung geändert und dadurch das Drehgelenk einfach an unterschiedliche Massen angepaßt werden.

An den beiden Gelenkteilen 4; 9 sind, in der Zeichnung nicht dargestellt, Gelenkarme befestigt. Diese Gelenkarme können zum Beispiel als Ständer und Tragarm einer Leuchte, beispielsweise einer medizinischen Leuchte, ausgebildet sein.

Bei einem Verdrehen des zweiten Gelenkteiles 9 gegen das erste Gelenkteil 4 werden die Bolzen 8 auf den Steigungen des Kurvenringes 5 geführt. Dabei wird, abhängig von der Drehrichtung, die Feder 3 entweder be- oder entlastet.

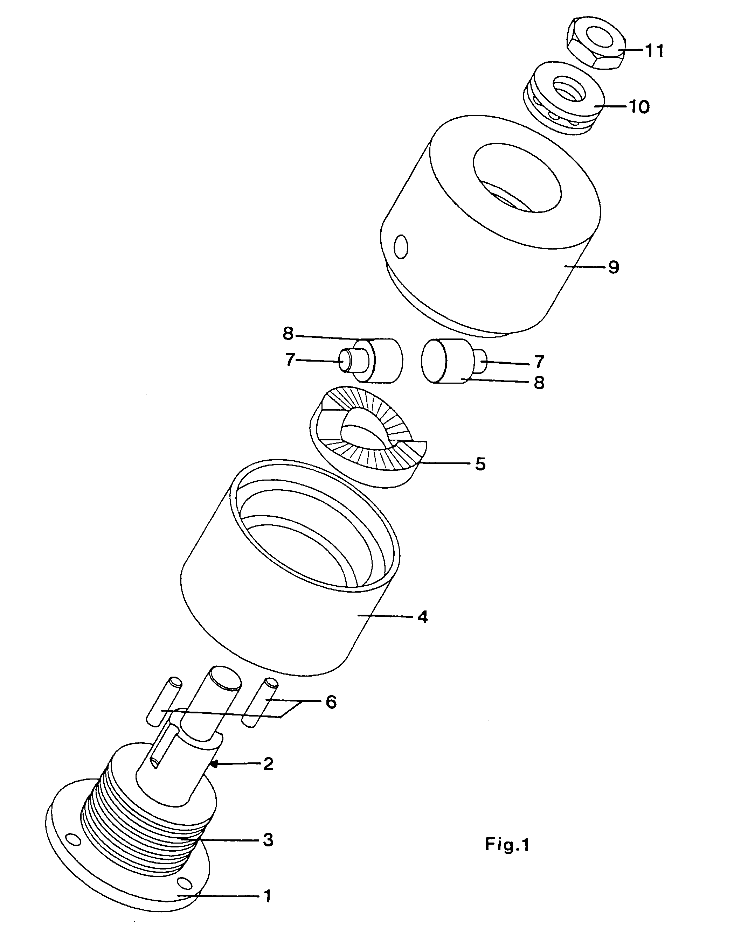

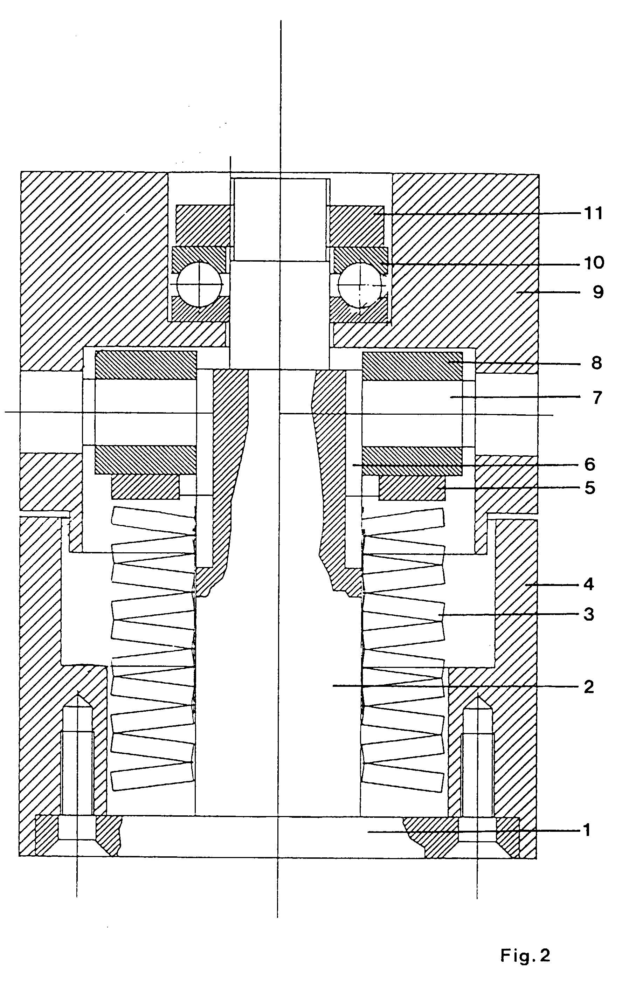

Während in Figur 1 eine Explosionsdarstellung des Drehgelenkes gezeigt ist, zeigt Figur 2 einen Längsschnitt durch das Drehgelenk.

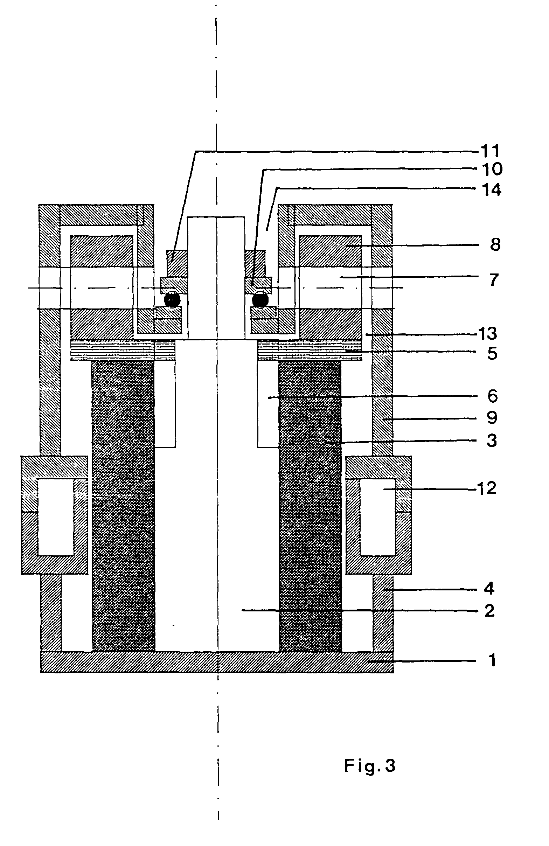

Figur 3 zeigt eine andere Ausführungsform des erfindungsgemäßen Drehgelenkes. Diese Ausführungsform unterscheidet sich von der ersten Ausführungsform im wesentlichen durch eine beidseitige Lagerung der Bolzen 7 in dem zweiten Gelenkteil 9. Dieses Gelenkteil 9 ist als Gehäuseteil ausgebildet, daß an seiner Stirnseite einen ringförmigen Hohlraum 13 aufweist, in dem die Bolzen 7 mit den Nadellagern 8 angeordnet sind. Die Bolzen 7 sind beidseitig in den Seiten des Hohlraumes 13 fixiert. Der ringförmige Hohlraum 13 umschließt einen Innenraum 14, in dem auf dem Ende der Achse 2 das Axiallager 10 angeordnet ist, das von der Mutter 11 arretiert wird. Das Axiallager 10 ist dabei zwischen den Bolzen 7 angeordnet. Die zueinander gewandten Enden des ersten Gelenkteiles 4 und des zweiten Gelenkteiles 9 bilden einen Kabelkanal 12, der die Kabelführung bei Verwendung des Drehgelenkes beispielsweise für Leuchten ermöglicht. Diese zweite Ausführung hat den Vorteil, daß sie zum einen sehr stabil und zum anderen sehr kompakt ausgeführt ist. Die Stabilität beruht unter anderem auf der beidseitigen Lagerung der Bolzen 7, während die Kompaktheit auf der Möglichkeit beruht, das Axiallager 10 zwischen den Bolzen 7 anzuordnen.

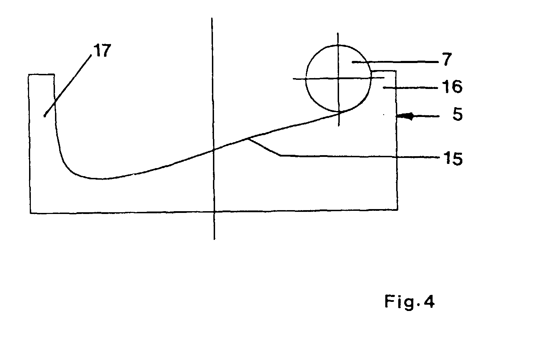

In Figur 4 ist die Seitenansicht des Kurvenringes 5 schematisch dargestellt. An beiden Seiten der Steigung 15 sind Endanschläge 16; 17 angeordnet, um den Drehweg zu begrenzen, und um eine Beschädigung des Drehgelenkes zu vermeiden.

## Patentansprüche

1. Drehgelenk mit zwei gegeneinander um eine Achse (2) verdrehbar angeordneten Gelenkteilen (4,9) einem in einem im wesentlichen von den beiden Gelenkteilen (4;9) gebildeten Gehäuse koaxial zu der Achse angeordneten Kurvenring (5), der eine Kurvenbahn mit einer räumlichen Krümmung aufweist, mit koaxial zur Achse angeordneter Feder (3), wobei radial zur Achse angeordnete Bolzen (7) Lager (8) aufweisen, deren Außenumfang auf der Kurvenbahn kraftschlüssig aufliegt, die Achse (2) starr mit dem ersten Gelenkteil (4) verbunden ist, und das zweite Gelenkteil (9) gegen eine Bewegung in Richtung der Achse arretiert ist dadurch gekennzeichnet, daß der Kurvenring (5) axial beweglich und gegen ein Verdrehen gegenüber der Achse gesichert angeordnet ist und daß die Bolzen (7) in dem zweiten Gelenkteil (9) fixiert sind.

2. Drehgelenk nach Anspruch 1, dadurch gekennzeichnet, daß das Federführungsteil durch die Achse (2) gebildet ist.

3. Drehgelenk nach Anspruch 1 oder2, dadurch gekennzeichnet, daß der Kurvenring (5) an der Achse (2) angeordnet ist.

4. Drehgelenk nach einem der Ansprüche 1 bis 2, dadurch gekennzeichnet, daß die Bolzen (7) beidseitig gehalten sind.

5. Drehgelenk nach einem der Ansprüche 1 bis 4, dadurch gekennzeichnet, daß das Federführungsteil zylindrisch ausgebildet ist.

6. Drehgelenk nach einem der Ansprüche 1 bis 5, dadurch gekennzeichnet, daß das zweite Gelenkteil (9) an der Achse (2) axial arretiert ist.

7. Drehgelenk nach einem der Ansprüche 1 bis 6, dadurch gekennzeichnet, daß das zweite Gelenkteil (9) mittels eines Axiallagers (10) an der Achse (2) gelagert ist.

8. Drehgelenk nach einem der Ansprüche 3 bis 7, dadurch gekennzeichnet, daß die Achse (2) Mittel zur axialen Führung des Kurvenringes (5) aufweist.

9. Drehgelenk nach Anspruch 8, dadurch gekennzeichnet, daß die Mittel zur axialen Führung als Zylinderstifte (6) ausgebildet sind, die in Ausnehmungen im Innenumfang des Kurvenringes (5) eingreifen.

10. Drehgelenk nach einem der Ansprüche 1 bis 9, dadurch gekennzeichnet, daß die Achse (2) an einer Abschlußplatte (1) fixiert ist, die an dem ersten Gelenkteil (4) starr und im wesentlichen senkrecht zur Achse (2) angeordnet ist.

11. Drehgelenk nach einem der Ansprüche 1 bis 10, dadurch gekennzeichnet, daß die an den Bolzen (7) angeordneten Lager (8) als Nadellager ausgebildet sind.

12. Drehgelenk nach einem der Ansprüche 7 bis 11 unter Einschluß von 7, dadurch gekennzeichnet, daß zwei Bolzen (7) einander gegenüberliegend angeordnet sind, wobei der radiale Abstand der Bolzen (7) zueinander größer ist als der Durchmesser des Axiallagers (10).

13. Drehgelenk nach einem der Ansprüche 1 bis 12, dadurch gekennzeichnet, daß der Kurvenring (5) je zwei Endanschläge (16;17) für die Bolzen (7) aufweist.

## Claims

1. A rotary joint with two joint parts (4, 9) arranged rotatably about an axis (2), with a curve ring (5) arranged in a housing, formed substantially from the two joint parts (4;9), coaxially to the axis, which curve ring (5) has a curved sector with a three-dimensional curvature with a spring (3) arranged coaxially to the axis, in which pins (7) arranged radially to the axis have bearings (8), the outer circumference of which rests in a force-fit on the curved sector, the axis (2) is rigidly connected with the first joint part (4), and the second joint part (9) is arrested against a movement in the direction of the axis, characterised in that the curve ring (5) is axially movable and arranged secured against rotation with respect to the axis and that the pins (7) are fixed in the second joint part (9).

2. A rotary joint according to Claim 1, characterised in that the spring guide part is formed by the axis (2).

3. A rotary joint according to Claim 1 or 2, characterised in that the curve ring (5) is arranged on the axis (2).

4. A rotary joint according to one of Claims 1 to 3, characterised in that the pins (7) are held on both sides.

5. A rotary joint according to one of Claims 1 to 4, characterised in that the spring guide part is constructed so as to be cylindrical.

6. A rotary joint according to one of Claims 1 to 5, characterised in that the second joint part (9) is arrested axially on the axis (2).

7. A rotary joint according to one of Claims 1 to 6, characterised in that the second joint part (9) is mounted on the axis (2) by means of an axial bearing (10).

8. A rotary joint according to one of Claims 3 to 7, characterised in that the axis (2) has means for axial guidance of the curve ring (5).

9. A rotary joint according to Claim 8, characterised in that the means for axial guidance are constructed as cylindrical pins (6) which engage in recesses in the inner circumference of the curve ring (5).

10. A rotary joint according to one of Claims 1 to 9, characterised in that the axis (2) is fixed to a stop plate (1) which is arranged rigidly against the first joint part (4) and substantially perpendicular to the axis (2).

11. A rotary joint according to one of Claims 1 to 10, characterised in that the bearings (8) arranged against the pin (7) are constructed as needle bearings.

12. A rotary joint according to one of Claims 7 to 11, including 7, characterised in that two pins (7) are arranged lying opposite each other, the radial spacing of the pins (7) with respect to each other being greater than the diameter of the axial bearing (10).

13. A rotary joint according to one of Claims 1 to 12, characterised in that the curve ring (5) has respectively two end stops (16; 17) for the pins (7).

## Revendications

1. Articulation rotative comprenant deux parties d'articulation (4, 9) agencées avec faculté de rotation l'une par rapport à l'autre autour d'un pivot (2), une bague de came (5) agencée coaxialement au pivot dans un boîtier essentiellement formé par les deux parties d'articulation (4, 9), ladite bague de came présentant une piste incurvée avec une courbure dans l'espace, et comprenant un ressort (3) disposé coaxialement par rapport au pivot, dans laquelle des boulons (7) agencés radialement par rapport au pivot comportent des paliers dont la périphérie extérieure repose par coopération de forces sur la piste incurvée, le pivot (2) étant relié rigidement à la première partie d'articulation (4), et la deuxième partie d'articulation (9) étant arrêtée à l'encontre d'un déplacement en direction du pivot, caractérisée en ce que la bague de came (5) est mobile axialement, et agencée de manière bloquée à l'encontre d'une rotation vis-à-vis du pivot, et en ce que les boulons (7) sont fixés dans la deuxième partie d'articulation (9).

2. Articulation rotative selon la revendication 1, caractérisée en ce que la partie de guidage à ressort est formée par le pivot (2).

3. Articulation rotative selon l'une ou l'autre des revendications 1 et 2, caractérisée en ce que la bague de came (5) est agencée sur le pivot (2).

4. Articulation rotative selon l'une des revendications 1 à 3, caractérisée en ce que les boulons (7) sont maintenus des deux côtés.

5. Articulation rotative selon l'une des revendications 1 à 4, caractérisée en ce que la partie de guidage à ressort est réalisée sous forme cylindrique.

6. Articulation rotative selon l'une des revendications 1 à 5, caractérisée en ce que la deuxième partie d'articulation (9) est arrêtée axialement sur le pivot (2).

7. Articulation rotative selon l'une des revendications 1 à 6, caractérisée en ce que la deuxième partie d'articulation (9) est montée sur le pivot (2) au moyen d'un palier axial (10).

8. Articulation rotative selon l'une des revendications 3 à 7, caractérisée en ce que le pivot (2) comprend des moyens pour le guidage axial de la bague de came (5).

9. Articulation rotative selon la revendication 8, caractérisée en ce que lesdits moyens de guidage axial sont réalisés sous forme de tiges cylindriques (6), lesquelles s'engagent dans des évidements dans la périphérie intérieure de la bague de came (5).

10. Articulation rotative selon l'une des revendications 1 à 9, caractérisée en ce que le pivot (2) est fixé sur une plaque de fermeture (1), laquelle est agencée rigidement sur la première partie d'articulation (4) et sensiblement perpendiculairement au pivot (2).

11. Articulation rotative selon l'une des revendications 1 à 10, caractérisée en ce que les paliers (8) agencés sur les boulons (7) sont réalisés sous forme de paliers à aiguilles.

12. Articulation rotative selon l'une quelconque des revendications 7 à 11, prise en dépendance de la revendication 7, caractérisée en ce que deux boulons (7) sont agencés en opposition l'un par rapport à l'autre, et en ce que la distance radiale des boulons (7) l'un de l'autre est supérieure au diamètre du palier axial (10).

13. Articulation rotative selon l'une des revendications 1 à 12, caractérisée en ce que la bague de came (5) comprend deux butées terminales respectives (16, 17) pour les boulons (7).
